# EUROPÄISCHE PATENTSCHRIFT

(11) **EP 2 166 630 B1**
(45) Veröffentlichungstag und Bekanntmachung des Hinweises auf die Patenterteilung: **17.08.2016**
(21) Anmeldenummer: 10150301.9
(22) Anmeldetag: 23.10.2008
(51) Int. Cl.: H02G 1/12

(54) **Abisolierzange**
Stripping pliers
Pince à dénuder

(30) Priorität: 02.11.2007 DE 202007015347 U
(43) Veröffentlichungstag der Anmeldung: 24.03.2010
(62) Teilanmeldung aus: 08167392.3
(73) Patentinhaber: Weidmüller Interface GmbH & Co. KG, 32758 Detmold (DE)
(72) Erfinder: Storm, Siegfried, 33189, Schlangen (DE); Heggemann, Christian, 32758, Detmold (DE); Hetland, Detlev, 32760, Detmold (DE); Hanning, Günther, 32758, Detmold (DE); Köster, Thomas, 33189, Schlangen (DE); Wedler, Andreas, 32756, Detmold (DE)
(74) Vertreter: Specht, Peter

(56) Entgegenhaltungen:
- EP-A- 0 791 993
- DD-A1- 264 793
- DE-C1- 19 512 132
- DE-U1- 8 015 173

## Beschreibung

Die vorliegende Erfindung betrifft eine Abisolierzange gemäß dem Oberbegriff des Anspruchs 1.

Eine gattungsgemäße Abisolierzange ist aus der DE 195 12 32 C1 bekannt. Die dort gezeigte und beschriebene Konstruktion hat sich in der Praxis durchaus bewährt. Dabei ist die Abisolierzange so ausgebildet, dass eine Zugstange in Zangenmaullängsrichtung verschiebbar ist und an dieser zwei Abisolierorgane befestigt sind, um sich mit dieser zu bewegen und dabei die Isolationsschicht von einem Kabel abzuziehen. Auf einem der Abisolierorgane ist ein Leiteranschlag entlang des Abisolierorgans verschiebbar aufgesteckt. Nachteilig an dieser Abisolierzange ist, dass die Anbringung des Leiteranschlags keine genaue Einstellung erlaubt und auch der Halt des Leiteranschlags auf dem Abisolierorgan durch Aufstecken verbesserungswürdig ist. Eine nur teilweise Abisolierung in Form eines abisolierten Spalts ist nicht möglich.

Die US 6,910,401 offenbart eine Abisolierzange mit einer Schneideeinheit, die zwei drehbar montierte Arme beinhaltet, welche gegeneinander federgespannt sind und an ihren beiden Enden Schneidelemente tragen, wobei die Schneideeinheit zwischen Klemmkrallen aufgenommen ist und sich mit diesen bewegt. Mit dieser Schneideeinheit verbunden ist eine Ziehstange und ein Klemm- und Ziehmechanismus. Auf dem unteren Arm ist ein verschiebbarer einstückiger Leiteranschlag befestigt. Die Befestigung des Leiteranschlags auf dem Arm erfolgt durch eine Sperrzunge, die in eine verzahnte Nut an den Armseitenwänden eingreift. Bei dieser Befestigungsart besteht die Gefahr, dass der Leiteranschlag verhakt oder schwergängig zu verstellen ist. Eine nur teilweise Abisolierung in Form eines abisolierten Spalts ist auch hier nicht möglich.

Der Erfindung liegt die Aufgabe zugrunde, einen verbesserten Leiteranschlag für die Abisolierzange zu entwickeln.

Diese Aufgabe wird durch eine Abisolierzange mit den Merkmalen des Anspruchs 1 gelöst.

Durch die Zweistückigkeit des Leiteranschlags ist eine präzise und einfach zu bedienende Mechanik ermöglicht.

Weitere vorteilhafte Ausbildungen der Erfindung sind in den Unteransprüchen gekennzeichnet.

Nachfolgend werden Ausführungsbeispiele anhand der beigefügten Zeichnungen beschrieben. Es zeigen:
- Fig. 1, 2: eine Seitenansicht einer Ausführungsform der Abisolierzange mit abgenommenem Seitenteil in zwei Betätigungsstellungen,
- Fig. 3: eine perspektivische Ansicht einer Ausführungsform der Abisolierzange mit aufrastbarer Griffschale,
- Fig. 4: eine perspektivische Ansicht eines Messerhalters,
- Fig. 5: eine perspektivische Ansicht eines Leiteranschlags,
- Fig. 6: eine perspektivische Explosionsansicht des Leiteranschlags,
- Fig. 7: eine perspektivische Detailansicht einer Verzahnung des Messerhalters und des darin eingreifenden Leiteranschlags,
- Fig. 8, 9: eine Schnittansicht der Verzahnung bzw. Nichtverzahnung des Leiteranschlags mit dem darunter befindlichen Messerhalter,
- Fig. 10: eine perspektivische Ansicht eines Auswerfers, montiert an dem Messerhalter,
- Fig. 11: eine perspektivische Detailansicht des Auswerfers,
- Fig. 12: eine perspektivische Detailansicht einer Ausführungsform der Abisolierzange mit einer Zugstange und einem Teilabisolieranschlag,
- Fig. 13, 14: eine perspektivische Detailansicht des Teilabisolieranschlag in zwei Betätigungsstellungen,
- Fig. 15: eine perspektivische Detailansicht einer weiteren Ausführungsform der Abisolierzange mit Zugstange und einem Einstellrad,
- Fig. 16, 17: eine perspektivische Detailansicht des Einstellrades in zwei Betätigungsstellungen,
- Fig. 18: eine perspektivische Detailansicht einer Klemmbacke mit einem Stellschieber,
- Fig. 19: eine perspektivische Detailansicht des Stellschiebers,
- Fig. 20-23: perspektivische Detailansichten einer Ausführungsform der Abisolierzange bei der Entnahme der Messerhalter,

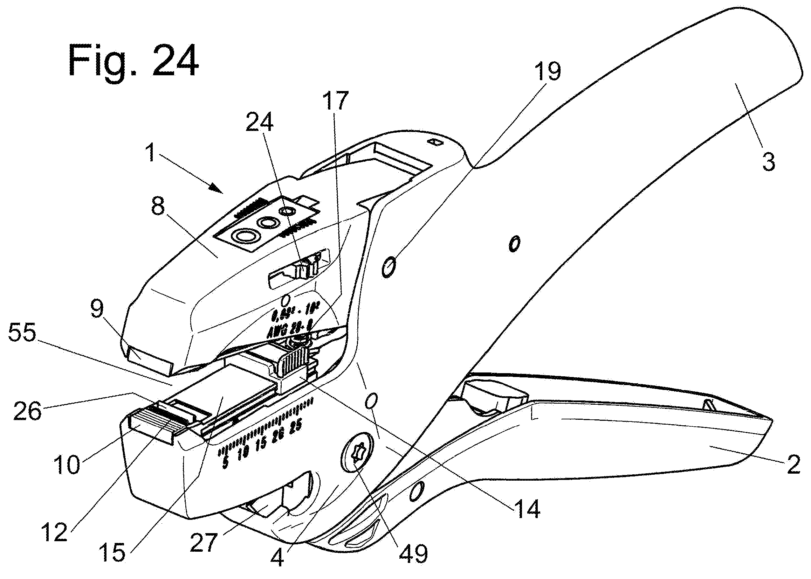

- Fig. 24: eine perspektivische Ansicht einer Ausführungsform der Abisolierzange im fertig montierten Zustand,
- Fig. 25: eine Seitenansicht einer weiteren Ausführungsform der Abisolierzange mit abgenommenem Seitenteil,
- Fig. 26a-c: perspektivische Detailansichten einer an der Abisolierzange angeordneten Schneidvorrichtung mit einem Sperrhebel,
- Fig. 27: eine Seitendetailansicht der in Fig.25 gezeigten Ausführungsform der Abisolierzange mit alternativ ausgebildeten Teilabisolieranschlag,
- Fig. 28: eine perspektivische Detailansicht des Teilabisolieranschlags aus Fig. 27,
- Fig. 29: eine Seitendetailansicht einer Ausführungsform der Abisolierzange mit alternativ ausgebildeten Teilabisolieranschlag,
- Fig. 30: eine perspektivische Detailansicht des Teilabisolieranschlags aus Fig. 29,
- Fig. 31: eine perspektivische Detailansicht eines Teilabisolieranschlags aus Fig. 30 mit einem Dämpfungsglied,
- Fig. 32: eine perspektivische Ausschnittsansicht einer weiteren Ausführungsform der Abisolierzange mit alternativ ausgebildeten Teilabisolieranschlag,
- Fig. 33: eine perspektivische Detailansicht des Teilabisolieranschlags aus Fig. 32.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position der Zange. Diese Begriffe sind nicht einschränkend zu verstehen, d.h. in verschiedenen Arbeitsstellungen oder durch spiegelsymmetrische Auslegung oder dergleichen können sich diese Bezüge ändern.

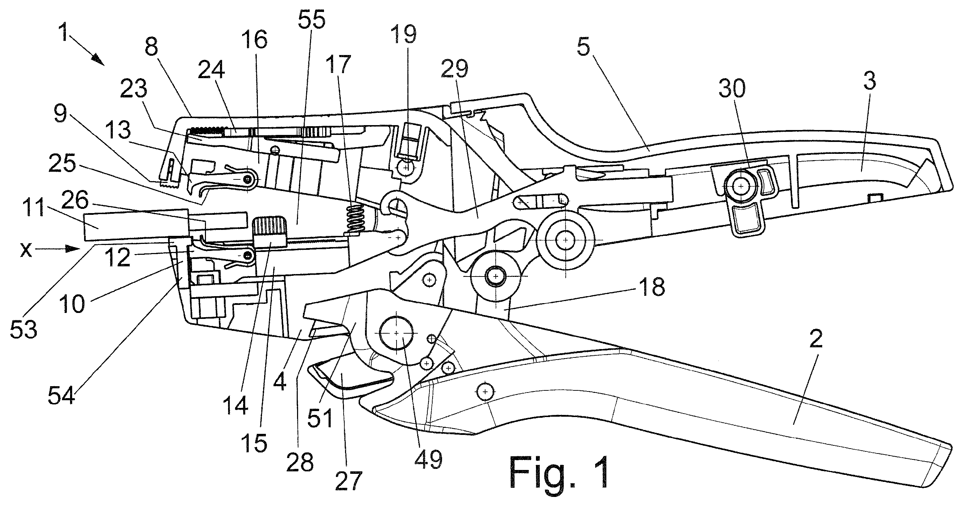

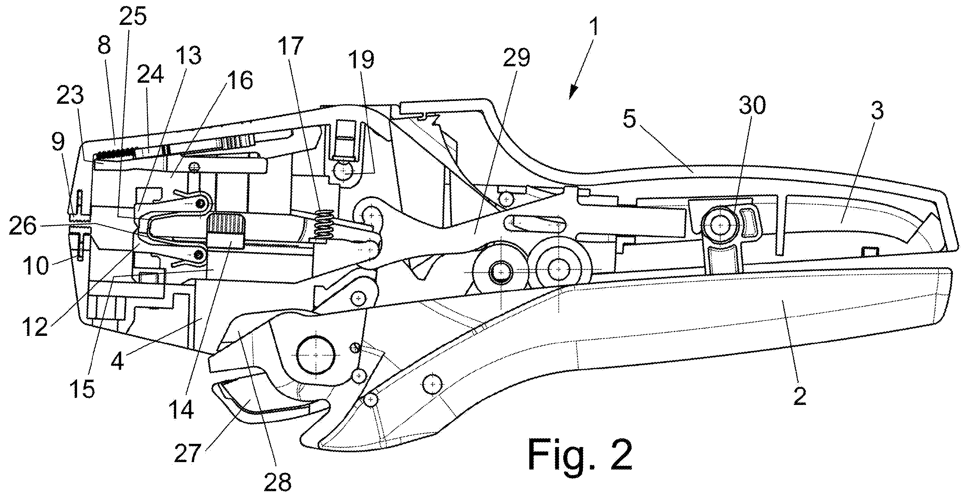

Die Fig. 1 und 2 zeigen eine Abisolierzange 1 mit zwei Handhebeln 2 und 3. Der eine Handhebel 3 ist einstückig an einer Gehäuseschale 4 ausgebildet, wohingegen der andere Handhebel 2 schwenkbar an der Gehäuseschale 4 gelagert ist.

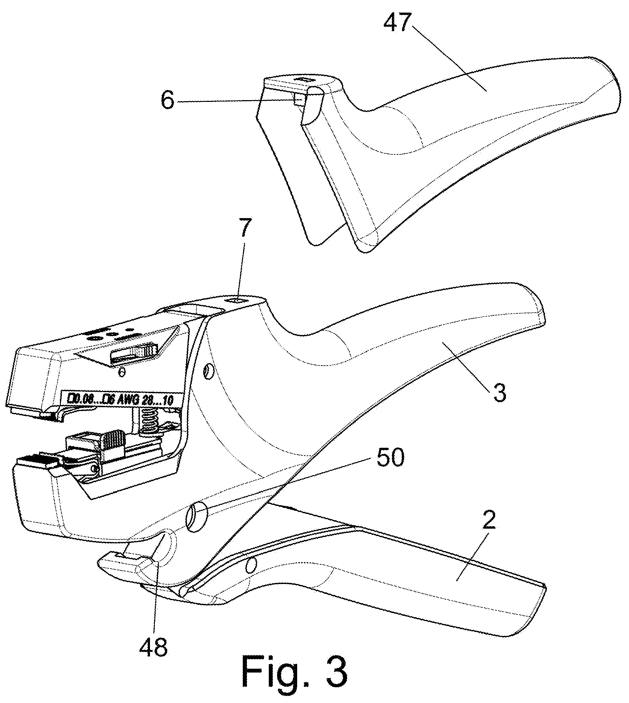

Auf die Handhebel 2, 3 ist eine Griffschale 5 abnehmbar aufgestülpt, die je nach Handgröße des Benutzers durch eine groß- bzw. kleinvolumigere Griffschale austauschbar ist und damit eine Griffweitenmodifizierung der Abisolierzange ermöglicht. In Fig. 3 ist neben einer Ausbildungsform der Abisolierzange beispielhaft für die Handhebel 2 und 3 eine Ersatzgriffschale 47 für den oberen Handhebel 3 abgebildet, der den Konturen des Handhebels 3 angepasst ist und den Handhebel 3 von vier Seiten umgreift. Denkbar wäre auch lediglich eine dem Handhebelrücken angepasste Schiene als Griffschalenaufsatz oder eine u-förmige Griffschale, die sowohl den Handhebelrücken als auch die Seitenbereiche des Handhebels 3 bedeckt. Als weitere Alternative käme auch eine auf die erste Griffschale 5 aufstülpbare Ersatzgriffschale 47 zur Vergrößerung der Griffweite in Frage, so dass die den Handhebel abdeckende Griffschale 5 auf dem Handhebel verbleibt. Bevorzugt verfügt die Griffschale 5 über mindestens einen Rastzahn 6, der in eine Einrastöffnung 7 im Handhebel 3 einrastbar ist, um der Griffschale 5 einen stabilen und sicheren Halt auf dem Handhebel 3 zu gewähren.

Der verschwenkbare Handhebel 2 ist an der Gehäuseschale 4 schwenkbar gelagert, wobei die Lagerung über einen Lagerbolzen 49 erfolgt, der durch Bohrungen 50 in den Seitenwänden 51 des Handhebels 2 und in den Seitenwänden der Gehäuseschale 4 hindurchragt. Ein Teil der Seitenwände 51 des Handhebels 2, insbesondere der Teil um die Bohrungen herum, liegt an den Innenwänden der Gehäuseschale 4 an. Dadurch wird der Handhebel 2 in der Gehäuseschale 4 geführt. Der verschwenkbare Handhebel 2 weist an seinem linken Ende eine Schneidvorrichtung mit einem Schneidmesser 27 auf, das sich beim Verschwenken des Handhebels auf den anderen Handhebel zu auf ein an der Gehäuseschale 4 angebrachtes Schneidmesser 28 zu bewegt, so dass ein an dieser Stelle eingelegtes Kabel durchtrennt werden kann. Die Gehäuseschale 4 ist an dieser Stelle bevorzugt als Rundmaul 48 zum Einlegen eines durchzutrennenden Kabels geformt.

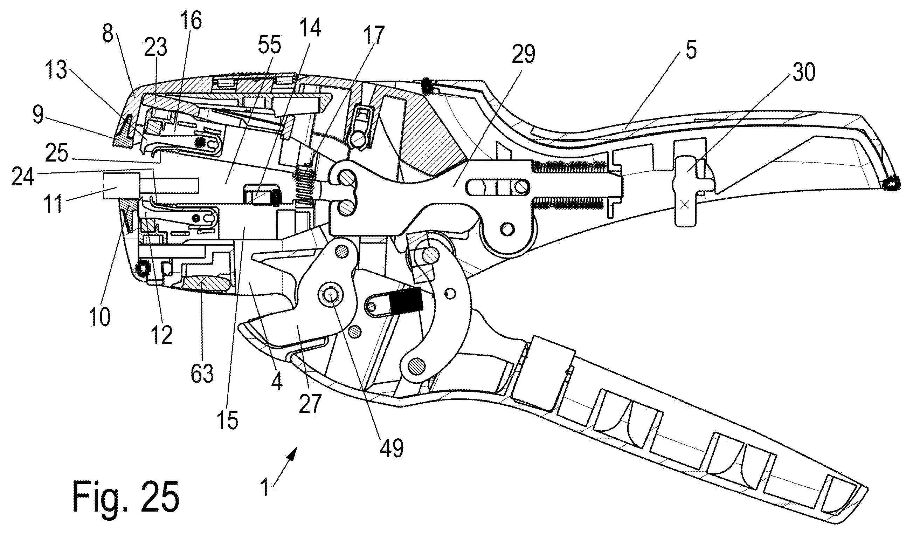

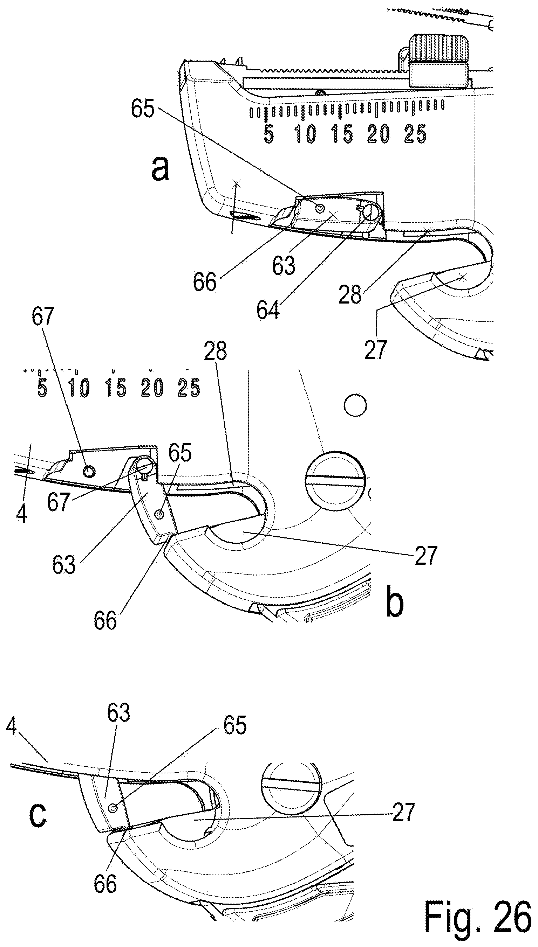

In einer in dem Figuren 25 bis 26C gezeigten besonderen Ausführungsform ist an der Gehäuseschale 4 vor der Schneidvorrichtung bzw. vor der Öffnung des Rundmauls 48 ein Sperrhebel 63 angeordnet. Dieser Sperrhebel ist an seinem der Schneidvorrichtung zugewandten Ende über eine Drehachse 64 vor der Öffnung des Rundmauls 48 an dem Gehäuse 4, bevorzugt neben dem Schneidmesser 28, angebracht und dadurch drehbar an dem Gehäuse gelagert. Zur Arretierung des Sperrhebels 63 an dem Gehäuse 4 ist der Sperrhebel 63 mit einem Rastnocken 65 ausgebildet, der zur Gehäuseseitenfläche 4 aus dem Sperrhebel 63 vorsteht und in einer Aussparung 67 an der Seitenfläche des Gehäuses 4 einrastbar ist. Die Figuren 26B und 26C zeigen den Sperrhebel 63 in einer Sperrstellung, bei der das Rundmaul 48 durch den Sperrhebel 63 versperrt wird. Dabei wird die Rundmaulöffnung 48 durch den Sperrhebel 63 versperrt, wobei eine Stirnseite 66 des Sperrhebels 63 an der gegenüber liegenden Seite des Rundmauls 48 arretiert ist. Alternativ ist auch ein Anbringen der Drehachse 64 des Sperrhebels 63 auf der gegenüber liegenden Seite des Rundmauls 48 denkbar. Zur Verhinderung eines unbeabsichtigten Trennens oder Durchschneidens eines elektrischen Leiters, welcher versehentlich in die Schneidvorrichtung geraten ist, wird der Sperrhebel 63 zur Versperrung des Rundmauls 48 aus seiner längs an das Gehäuse 4 angeschmiegten Neutralposition zur gegenüber liegenden Seite des Rundmauls 48 gedreht. Dadurch ist ein Einlegen eines Kabels in das Rundmaul 48 verhindert, so dass bei einer Betätigung des verschwenkbaren Handhebels 2 für einen Abisoliervorgang zwar die beiden Schneidmesser 27, 28 aufeinander zu bewegt werden, dabei aber kein Kabel durchtrennt werden kann.

An der Gehäuseschale 4 ist eine Klemmbacke 8 schwenkbar gelagert, wobei die Lagerung über einen Lagerbolzen 19 erfolgt, der durch Bohrungen 20, 21 in den Seitenwänden 51 der Klemmbacke 8 und in der Gehäuseschale 4 hindurchragt. Ein Teil der Seitenwände 51 der Klemmbacke 8, insbesondere der Teil um die Bohrungen 20 herum, liegt an den Innenwänden 52 der Gehäuseschale 4 an. Dadurch wird die Klemmbacke 8 in der Gehäuseschale 4 geführt.

Am vorderen Ende der Klemmbacke 4 ist ein Klemmbackeneinsatz 9 befestigt. Der Klemmbackeneinsatz 9 besteht aus einem flächigen Andruckstück 53 und einem senkrecht auf der Fläche stehenden Stift 54, der in die Spitze der Klemmbacke 8 hineinragt und dort kraft- oder formschlüssig gehalten wird. Diesem Klemmbackeneinsatz 9, insbesondere dessen Andruckstück 53, gegenüber ist ein weiterer Klemmbackeneinsatz 10 an der Spitze des Gehäuseschalenteils 4, der eine Zangenmaullippe bildet, in gleicher Weise befestigt. Die Klemmbacke 8 und ein vorderes, in den Fig. 1, 2 linke Teilstück der Gehäuseschale 4 bilden zusammen das Zangenmaul 55 der Abisolierzange.

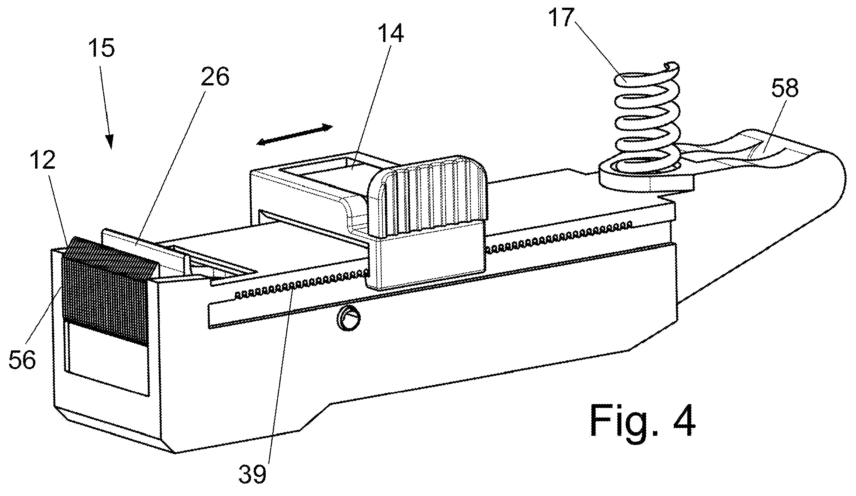

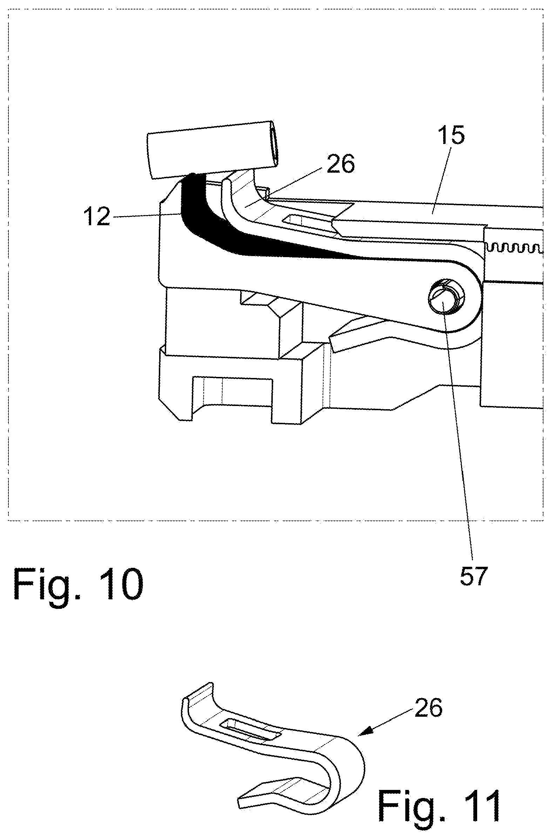

An der Unterseite der Klemmbacke 8 und der Oberseite des vorderen Gehäuseteilstücks 4 ist in Leitereinschubrichtung x hinter den Klemmbackeneinsätzen 9, 10 jeweils ein Messerhalter 15 bzw. 16 angeordnet. Wie in den Fig. 1 und 4 zu sehen ist, ragt auf beiden Messerhaltern 15, 16 an deren vorderen Enden jeweils ein Abisoliermesser 12, 13 hervor. Die Position der Abisoliermesser 12, 13 auf den Messerhaltern 15,16 in Leitereinschubrichtung x ist dabei so gewählt, dass die Messerkanten beim Gebrauch der Zange aufeinandertreffen. Diese Abisoliermesser können als massive Klinge oder, wie in Fig. 4 gut zu erkennen ist, bevorzugt als Lamellensatz 56 ausgebildet sein. Vorteil dieser Ausbildung ist eine bessere Anpassung der Lamellen an die Kontur eines abzuisolierenden Kabels. Mauleinwärts ist auf einem der Messerhaltern 15, 16, bevorzugt auf beiden jeweils ein Auswerfer 25, 26 angebracht, der ein Festsetzen von Isolationsresten auf den Abisoliermessern 12, 13 verhindert. Der untere Auswerfer 25 ist beispielhaft in den Fig. 10 und 11 dargestellt. Er ist als Feder ausgeführt. Bevorzugt ist er von s-förmiger Gestalt, wobei das eine Ende mit dem auszuwerfenden Abisolierstück in Kontakt kommt und das andere Ende um einen Bolzen 57 oder bevorzugt eine Schraube herum gelegt ist, an dem bzw. der auch das Abisoliermesser 12 gemäß der in Fig. 1 dargestellten Ausführungsform befestigt ist.

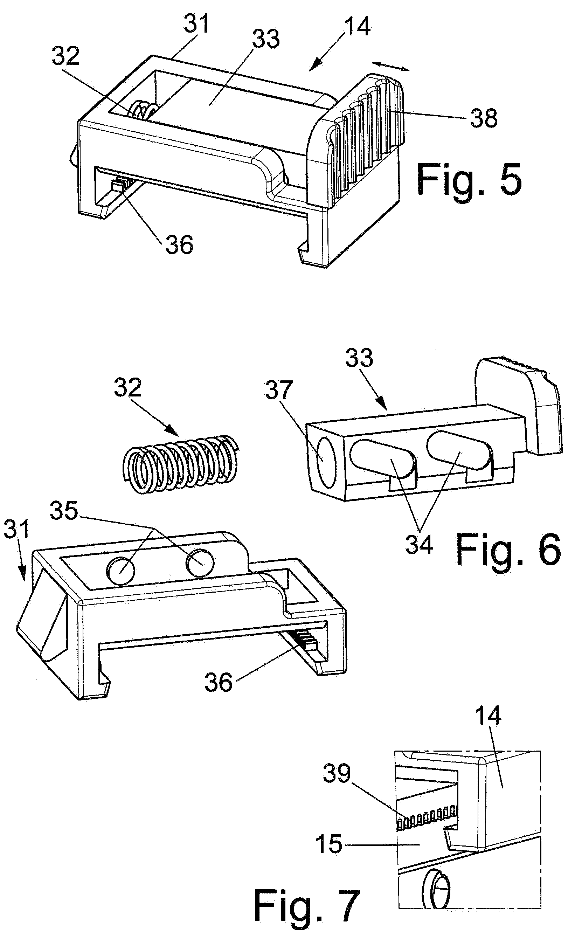

Weiter mauleinwärts von diesen ist auf dem unteren, in der Gehäuseschale 4 befindlichen Messerhalter 15 ein Leiteranschlag 14 verschiebbar montiert, um verschiedene Abisolierlängen zu ermöglichen. Der Leiteranschlag 14 ist, wie in den Fig. 5-7 zu sehen ist, zusammengesetzt aus einem Anschlag 31, einem Anschlagrastelement 33 und einer Druckfeder 32. Das Anschlagrastelement 33 wird dabei über schräg verlaufende Langlöcher 34, in die jeweils eine Ausstülpung 35 eingreift, welche sich an den Innenlängsseiten des Anschlags 31 befinden, in dem Anschlag 31 geführt.

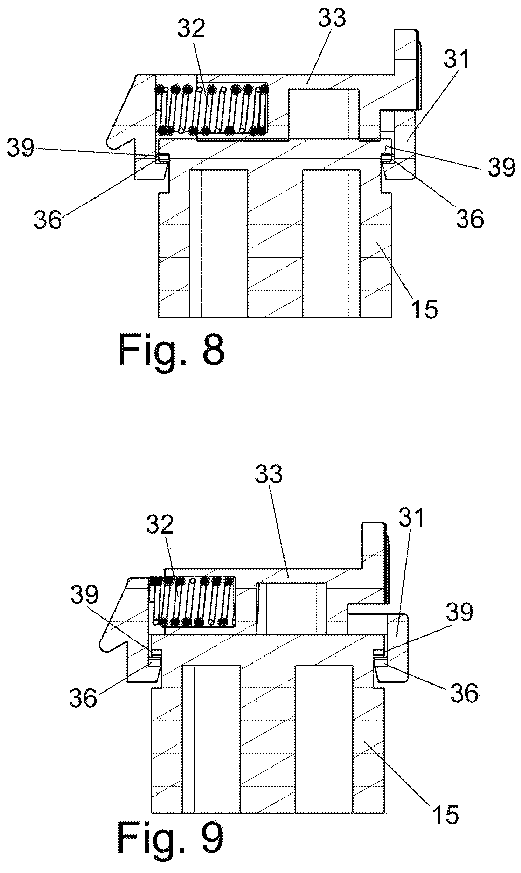

Die Funktionsweise des Leiteranschlags 14 ist in den Fig. 5-9 dargestellt. Bei Betätigen des Leiteranschlags 14 durch Drücken auf eine Betätigungsfläche 38 am Anschlagsrastelement 33 wird das Anschlagsrastelement 33 entgegen der Druckkraft einer zwischen Anschlag 31 und dem entgegengesetzten Ende des Anschlagrastelements 33 befindlichen Druckfeder 32 seitlich in die Abisolierzange hineingedrückt, dabei aufgrund der Führung des Anschlagrastelements 33 in dem Anschlag 31 durch die Langlöcher 34 und Ausstülpungen 35 der Anschlag 31 nach unten gedrückt und dadurch eine am Anschlag 31 angebrachte Verzahnung 36 aus einer an den Längsseiten des Messerhalter 15 entlang laufenden Verzahnung 39 losgelöst. Sodann lässt sich der Leiteranschlag längs des Messerhalters verschieben. Lässt man anschließend die Betätigungsfläche 38 am Anschlag 31 wieder los, drückt die Druckfeder 32 das Anschlagrastelement 33 wieder in die Ausgangsstellung im Anschlag zurück. Dabei wird der Anschlag 31 nach oben angehoben und die Verzahnung 36, 39 von Anschlag 31 und Messerhalter 15 greift wieder ineinander und setzt somit den Leiteranschlag 14 auf dem Messerhalter 15 wieder fest.

Um eine exakte Einstellung des Leiteranschlags 14 für eine gewünschte Abisolierlänge zu unterstützen, ist auf der Gehäuseschale 4 im Verschiebebereich des Leiteranschlags 14 parallel zu diesem eine Skala aufgetragen. Bevorzugt besteht die Skala aus Millimeterstrichen, andere Einheiten sind selbstverständlich ebenfalls denkbar. Bevorzugt ist die Skale unmittelbar unter- oder oberhalb des Messerhalters 15, 16 auf der Gehäuseschale 4 platziert.

Im Zangenmaul 55 sitzt auf dem unteren Messerhalter 15 eine Druckfeder 17, die gegen den oberen Messerhalter 16 drückt und der durch einen Benutzer ausgeübte Kraft auf das Zangenmaul 55 entgegenwirkt und beim Loslassen der Handhebel 2, 3 das Zangenmaul 55 wieder öffnet.

Die Messerhalter 15, 16 sind an ihrem in Fig. 1 rechten Ende in das Maul einer Zugstange 29 herausnehmbar eingehakt. Dieses Maul ist in Form einer zu den Messerhaltern hin offenen Drei ausgebildet, deren Enden in eine in den Endstücken der Messerhalter dafür vorgesehene Öffnung eingreift und die Messerhalter auf diese Weise sicher festhält, so dass bei einer horizontalen Bewegung der Zugstange die Messerhalte mitbewegt werden. Im vorderen Bereich sind die Messerhalter 15, 16 mit den Innenseiten des vorderen Teilstücks der Gehäuseschale 4 bzw. den Innenseiten der Klemmbacke verklemmt.

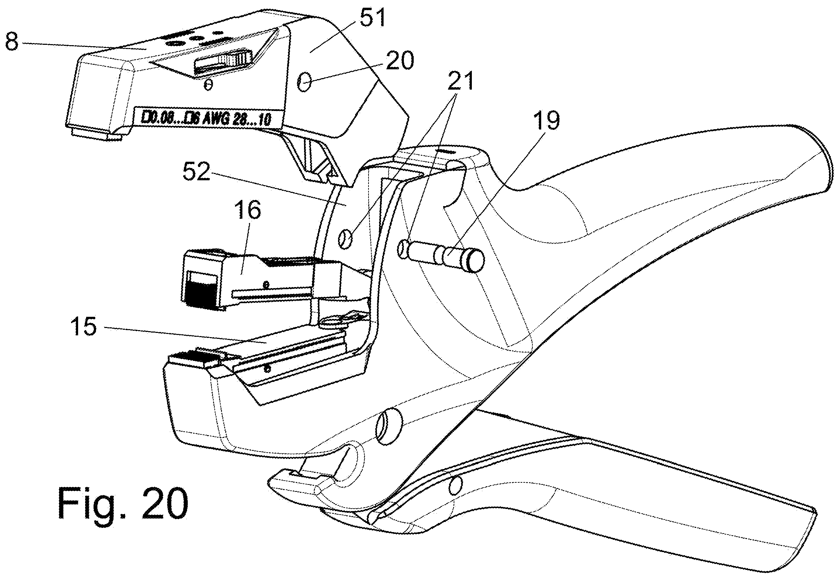

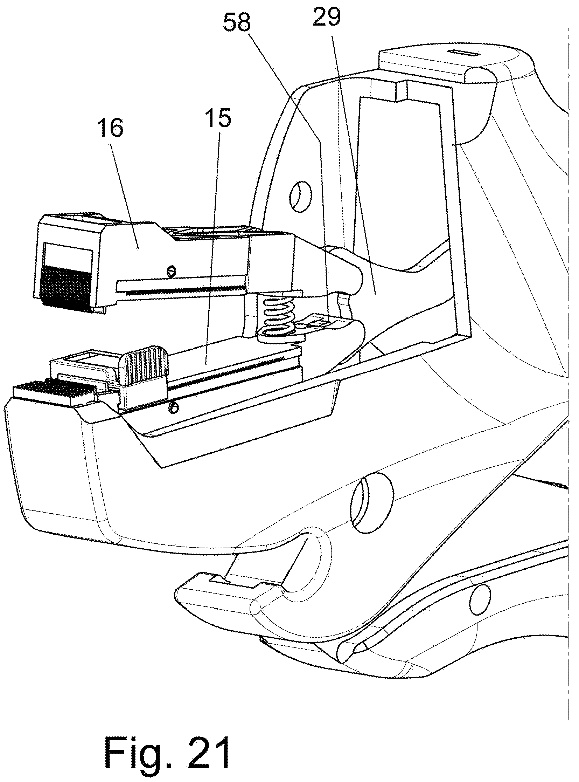

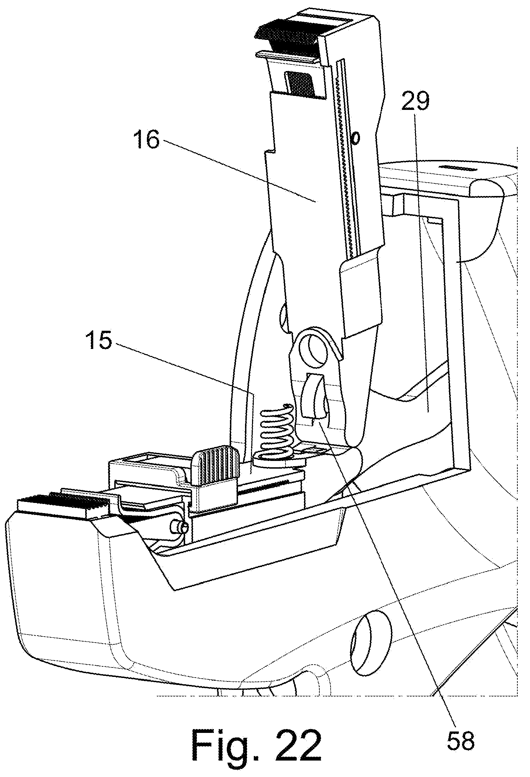

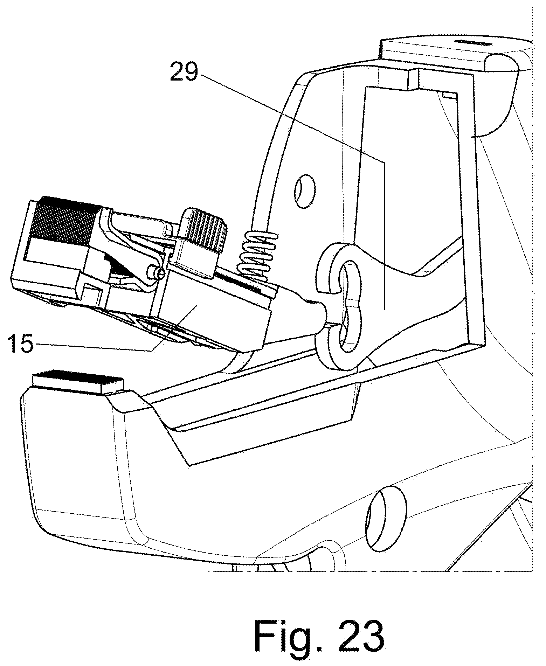

Um die Messerhalter 15, 16 auszuwechseln, muss, wie in den Fig. 20-23 dargestellt, zunächst der Lagerbolzen 19, der die Klemmbacke 8 arretiert, aus der Lagerstelle 46 und die Klemmbacke 8 aus der Gehäuseschale entfernt werden. Anschließend schwenkt man den oberen Messerhalter 16 nach oben, um ihn aus der oberen Gabel des Zugstangenmauls herauszunehmen. Sobald der obere Messerhalter 16 entfernt ist, kann der untere in der Gehäuseschale liegende Messerhalter 15 leicht nach oben geschwenkt und aus der aus der unteren Gabel des Zugstangenmauls herausgenommen werden. Die Messerhalter können anschließend durch neue oder solche mit anderer Zahngröße ersetzt werden.

Die Zugstange 29 läuft im wesentlichen horizontal durch das Innere der Abisolierzange. Sie ist horizontal verschiebbar gelagert. An ihrem zum Zangenmaul zeigenden Ende befindet sich das bereits erwähnte Maul in Form einer offenen Drei, in das die Messerhalter eingehakt sind.

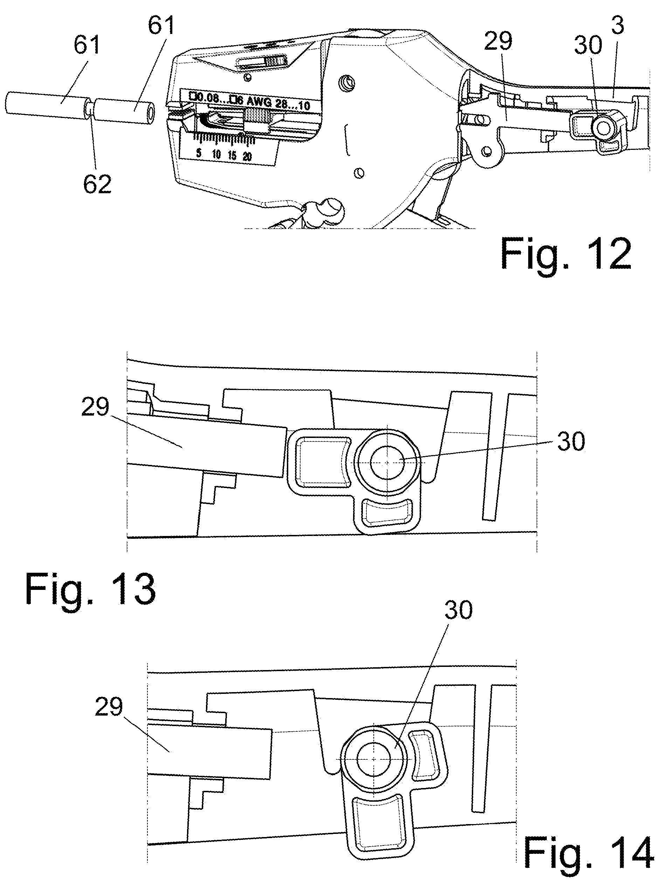

Hinter dem von den Messerhaltern (15, 16) abgewandten Ende der Zugstange ist in einer besonderen Ausführungsform der Abisolierzange ein drehbarer Teilabisolieranschlag 30 im Handhebel 3 befestigt. Eine Detailansicht des Teilabisolieranschlags 30 ist in den Fig. 12-14 dargestellt. Dieser ermöglicht eine Teilabisolierung 62 eines isolierten Drahtstückes 61. Er ist bevorzugt als L-Stück ausgebildet. Die Lagerung des Teilabisolieranschlag 30 befindet sich im L-Knick, so dass der Teilabisolieranschlag 30 wahlweise so eingestellt werden kann, dass die Zugstange 29 in ihrer Bewegung nach hinten durch den langen Schenkel des L-Stücks begrenzt wird und somit eine vollständige Abisolierung des Drahtstücks verhindert. In der anderen gezeigten Einstellmöglichkeit ist der Teilabisolieranschlag 30 von der Zugstange 29 so weggedreht, dass diese sich frei bewegen kann.

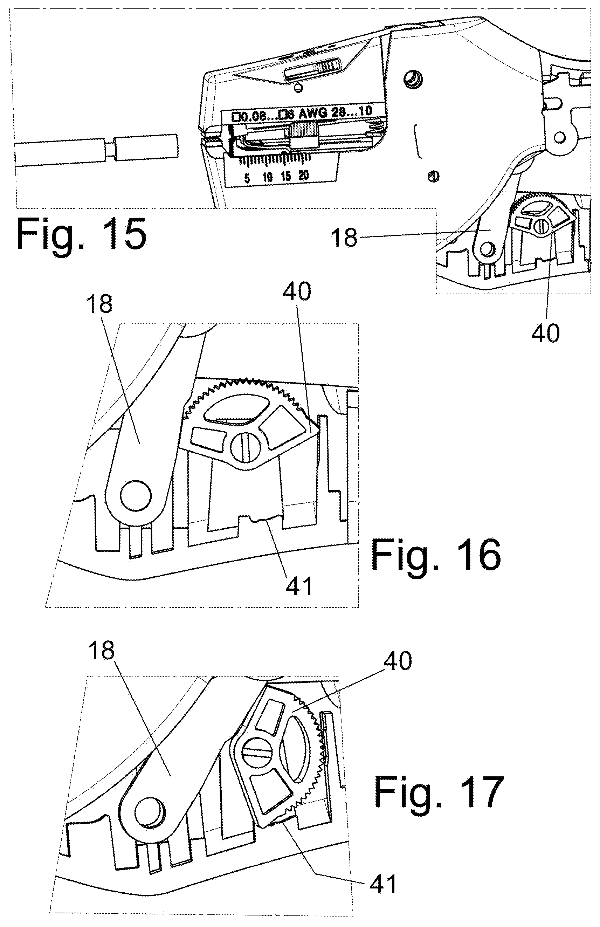

In einer anderen, in den Fig. 15-17 gezeigten, bevorzugten Ausführungsform wird die Bewegungsfreiheit der Zugstange 29 durch ein Einstellrad 40 begrenzt. Dieses Einstellrad 40 ist rechts neben dem Omegahebel, der unter anderem auch die Bewegung der Zugstange 29 steuert, oberhalb des Handhebels 2 drehbar gelagert. Der Umfang des Einstellrad ist bevorzugt teilweise mit Zähnen 22 ausgebildet, um eine genaue Einstellung des Einstellrades zu ermöglichen. In der in Fig. 16 gezeigten Teilabisoliereinstellung begrenzt das Einstellrad 40 den Omegahebel 18 derart, dass die Zugstange 29 und damit auch die Messerhalter 15, 16 nur einen begrenzten Weg vollführen. Die Einstellung für die Vollabisolierung ist in Fig. 17 dargestellt. Hier ist das Einstellrad an eine unterhalb des Einstellrads vorhandene Kurvenleiste 41 arretiert und von dem Omegahebel abgewandt, dass dieser mehr Bewegungsfreiheit erhält und damit der Zughebel 29 und die Messerhalter 15, 16 den ganzen Weg vollführen können.

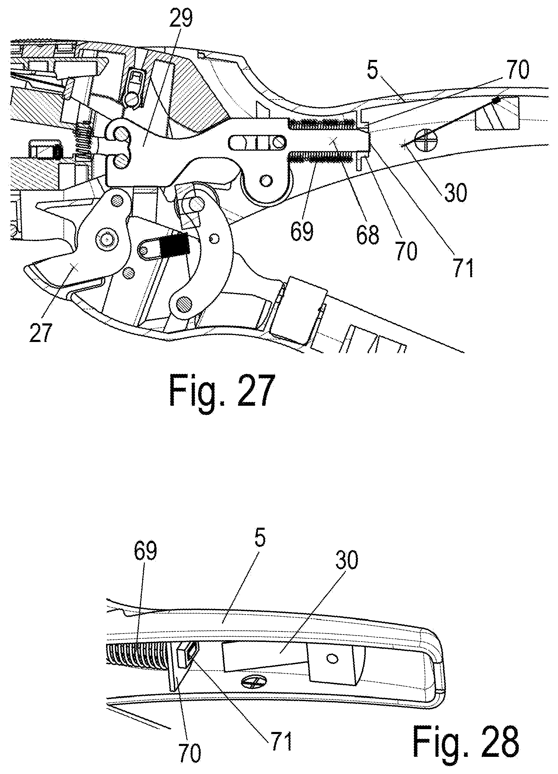

In einer weiteren, in den Figuren 27 und 28 gezeigten, bevorzugten Ausführungsform wird die Bewegungsfreiheit der Zugstange 29 durch einen als Blattfeder ausgebildeten Teilabisolieranschlag 30 begrenzt. Wie in der Detailansicht dieses Teilisolieranschlags 30 in Figur 28 zu erkennen ist, ist dieser ebenfalls im Handhebel frei befestigt. Die Blattfeder 30 ist mit einem hinteren, dem Zangenende zugewandten, Ende in dem Handhebel frei befestigt. Das vordere Ende der Blattfeder zeigt in Richtung eines Zugstangenendes 71, welches durch eine Öffnung in einem Anschlag 70, der im Handhebel 3 angeordnet ist, hindurchdrückt. Bevorzugt ist der hintere Zugstangenabschnitt 68 von einem Federelement 69 umfasst, das eine Abisolierbewegung der Zugstange in Richtung des Zangenendes entgegenwirkt, indem das eine Ende des Federelements 69 an dem Anschlag 70 anliegt und mit dem anderen Ende durch die Bewegung der Zugstange in Richtung des Anschlags zusammengedrückt wird. Dadurch trifft die Zugstange 29 beim Zusammendrücken der Zange nach Zurücklegen einer Strecke X auf den Teilisolieranschlag 1, durch dessen Erreichen angezeigt ist, dass der Teilabisoliervorgang abgeschlossen ist. Um einen vollen Abisoliervorgang durchzuführen, muss die Zugstange 29 weiter gegen die Blattfeder 30 gedrückt werden, so dass diese ausgelenkt wird.

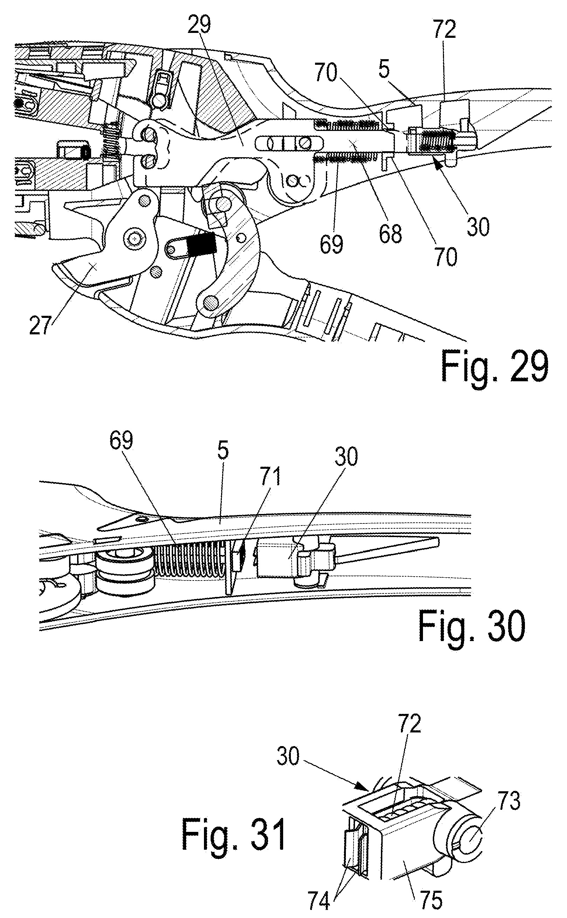

Gemäß einer weiteren besonderen Ausführungsform wird die Bewegungsfreiheit der Zugstange 29 durch einen Teilabisolieranschlag 30 begrenzt, welcher, wie in den Figuren 29 bis 31 gezeigt, in dem Handhebel 3 über eine Drehachse 73 drehbar befestigt ist. Der Teilabisolieranschlag 30 weist des Weiteren ein Gehäuse 75 auf, in dem ein Dämpfungsglied 72 gelagert ist, das aus einer Stirnseite 74 des Gehäuses herausragt und während eines Teilabisoliervorgangs auf die nach hinten geschobene Zugstange 29 trifft.

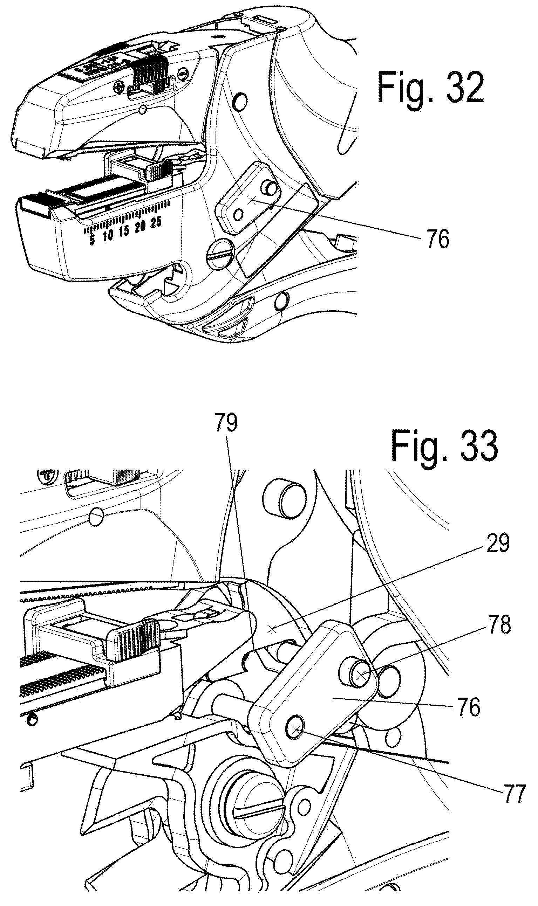

In einer nochmals anderen, in den Figuren 32 und 33 gezeigten bevorzugten Ausführungsform weist die Zugstange 29 eine Aussparung 79 auf, in die ein in einem Gehäuse 76 gefedert gelagerter Bolzen 78 eingreift. Das Gehäuse 76 wird mit einem Stift 77 am Gehäuse 4 der Abisolierzange fixiert. Auf diese Weise wird durch Eindrücken des Bolzens 78 in die Ausnehmung 79 die Bewegungsfreiheit der Eindrücken des Bolzens 78 in die Ausnehmung 79 die Bewegungsfreiheit der Zugstange 29 in Richtung der Zugstangenlängsachse auf die Länge der Ausnehmung 79 begrenzt. Dadurch wird erreicht, dass der elektrische Leiter lediglich teilabisoliert wird, das heißt die Isolation wird durchtrennt, aber der Abisolierrest verbleibt auf dem Leiter.

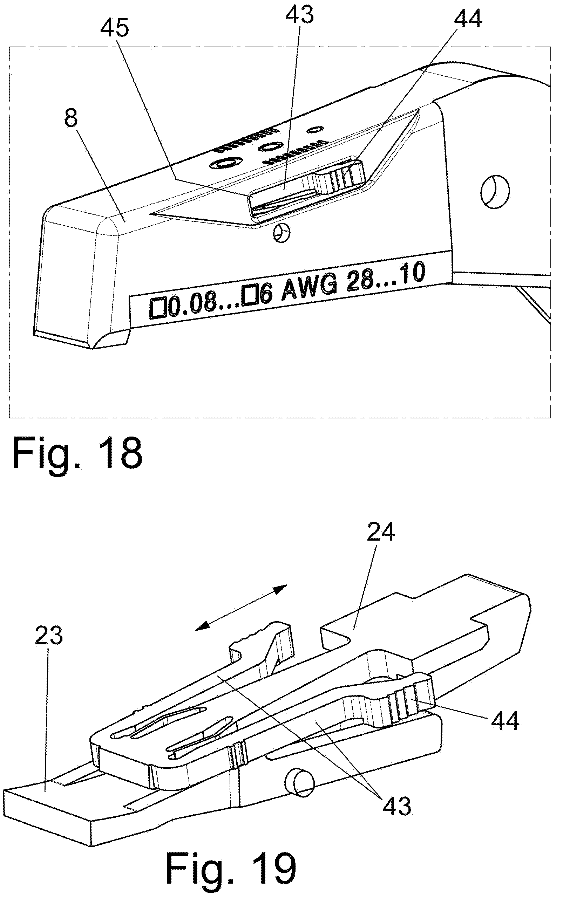

Wie in den Fig. 1 und 18 zu sehen ist, ist in der Klemmbacke 8 oberhalb des Messerhalters 16 ein Stellschieber 24 zur Höhenänderung des Messerhalters angeordnet. Dieser gleitet, wie in Fig. 19 gezeigt, auf einer Gleitplatte 23. Der Stellschieber 24 weist an seinen Seiten je einen federnden Schenkel 43 mit an den Enden geriffelten äußeren Berührungsflächen 44 auf, die durch Öffnungen 45 in den Seitenflächen der Klemmbacke 8 aus dieser herausragen und von einem Benutzer eingedrückt werden können, um den Stellschieber entlang der Längsachse der Klemmbacke zu verschieben. Der Stellschieber 24 ist in seinem vorderen Bereich flach ausgebildet und verdickt sich nach hinten.. Die federnden Schenkel des Stellschiebers verschmelzen am vorderen Ende mit dem Hauptkörper des Stellschieber und spreizen sich zum anderen Ende hin vom diesem weg. Der Hauptkörper des Stellschiebers 24 verjüngt sich dabei in seiner Breite im Bereich der Schenkellänge nach hinten, um ein Eindrücken der Schenkel auf den Hauptkörper zu zu ermöglichen. Der hintere Bereich des Stellschiebers 24 hat die gleiche Breite wie die darunter liegende Gleitplatte 23, nur das Endstück ist etwas schmaler ausgebildet. Schiebt man den Stellschieber 24 nach vorn, d.h. in der Figur nach links, so wird die Gleitplatte und damit auch der an dieser anliegende Messerhalter 16 nach unten gedrückt. Damit ist ein Feinregulierung der Einschneidtiefe in den abzuisolierenden Draht möglich, wodurch auch Isolationsschichten von Kabeln mit Isolierschichten von unterschiedlichem Durchmesser exakt einschneidbar sind. Zur Kennzeichnung, in welche Richtung der Stellschieber für eine Isolierschicht mit einem bestimmten Durchmesser verschoben werden muss, ist auf der Gehäuseschale 4, bevorzugt auf dem Rücken der Gehäuseschale 4 eine Skala 59 und mehrere Ringsymbole 60 mit fortlaufend wachsendem Radius aufgetragen.

Bei der Benutzung der Abisolierzange wird beim Zusammendrücken der beiden Handhebel 2, 3 mit einer Hand der Handhebel 2 in Richtung des Handhebels 3 gedrückt. Dabei wird über einen Hebelmechanismus zunächst die Klemmbacke 8 nach unten gegen die Gehäuseschale 4 gedrückt. Dabei wird ein in die Zange eingelegtes Kabelstück 11 festgeklemmt. Gleichzeitig schneiden die Abisoliermesser 12, 13 der Messerstücke 15, 16 in die Kabelummantelung des Kabelstücks 12 ein. Drückt man die Zange weiter zu, wird über den Hebelmechanismus die Zugstange und mit ihr die im Zugstangenmaul eingehakten Messerhalter 15, 6 nach hinten gezogen, wodurch die Isolierung des Kabelstücks nach hinten von dem Kabeldraht abgezogen wird. Je nach Stellung des Teilabisolieranschlags wird die Isolierung ganz oder nur teilweise von dem Kabelstück abgezogen. Dabei wird der Auswerfer gespannt. Sobald der Benutzer die Zangenhebel 2, 3 wieder loslässt und das Kabel aus der Zange entnimmt, wird die Klemmbacke 8 durch die Druckfeder 17 zurück in die offene Stellung gedrückt, der Auswerfer entspannt sich und wirft dabei das abgetrennt Isolierstück aus dem Zangenmaul aus.

### Bezugszeichenliste

1 Abisolierzange
2 Handhebel
3 Handhebel
4 Gehäuseschale
5 Griffschale
6 Rastzahn
7 Einrastöffnung
8 Klemmbacke
9 Klemmbackeneinsatz
10 Klemmbackeneinsatz
11 Kabelstück
12 Abisoliermesser
13 Abisoliermesser
14 Leiteranschlag
15 Messerhalter
16 Messerhalter
17 Druckfeder
18 Omegahebel
19 Lagerbolzen
20 Bohrung
21 Bohrung
22 Zähne
23 Gleitplatte
24 Stellschieber
25 Auswerfer
26 Auswerfer
27 Schneidmesser
28 Schneidmesser
29 Zugstange
30 Teilabisolieranschlag
31 Anschlag
32 Druckfeder
33 Anschlagrastelement
34 Langloch
35 Ausstülpung
36 Verzahnung
37 Federlager
38 Betätigungsfläche
39 Verzahnung
40 Einstellrad
41 Kurvenleiste
42 Einstellstück
43 Schenkel
44 Berührungsflächen
45 Öffnung
46 Lagerstelle
47 Ersatzgriffschale
48 Rundmaul
49 Lagerbolzen
50 Bohrungen
51 Klemmbackenseitenwand
52 Gehäuseschaleninnenwand
53 Andruckstück
54 Stift
55 Zangenmaul
56 Lamellensatz
57 Bolzen
58 Hinterschnitt
59 Skala
60 Ringsymbole
61 isolierten Drahtstück
62 abisolierten Drahtstück
63 Sperrhebel
64 Drehachse
65 Rastnocken
66 Stirnseite
67 Aussparung
68 Hinterer Zugstangenabschnitt
69 Federelement
70 Anschlag
71 Zugstangenende
72 Dämpfungsglied
73 Drehachse
74 Stirnseite
75 Gehäuse
76 Gehäuse
77 Stift
78 Bolzen
79 Ausnehmung

## Patentansprüche

1. Abisolierzange mit zwei Handhebeln (2, 3), einer Gehäuseschale (4) und einer relativ zu dieser schwenkbaren Klemmbacke (8), die mit dem vorderen Teil der Gehäuseschale (4) ein Zangenmaul (55) bildet, in welchem zwei relativ zueinander bewegliche Messerhalter (15, 16) mit je einem Abisoliermesser (12,13) gelagert sind und die Messerhalter im Zangenmaul (55) von einer Zugstange (29) gehaltert sind, wobei auf einem der Messerhalter (15, 16) ein Leiteranschlag (14) entlang des Messerhalters (15, 16) verschiebbar montiert ist, **dadurch gekennzeichnet, dass** der Leiteranschlag (14) mindestens zweiteilig ausgebildet ist wobei der Leiteranschlag (14) aus einem Anschlag (31) und einem Anschlagrastelement (33) zusammengesetzt ist, und wobei das Anschlagrastelement (33) über schräg verlaufende Langlöcher (34), in die jeweils eine Ausstülpung (35) eingreift, welche an den Innenlängsseiten des Anschlags (31) ausgebildet sind, in dem Anschlag (31) geführt ist.

2. Abisolierzange nach Anspruch 1, **dadurch gekennzeichnet, dass** der Leiteranschlag (14) aus einem Anschlag (31), einem Anschlagrastelement (33) und einer Druckfeder (32) zusammengesetzt ist.

3. Abisolierzange nach einem der Ansprüche 1 - 2, **dadurch gekennzeichnet, dass** eine am Anschlag (31) angebrachte Verzahnung (36) in eine an den Längsseiten des Messerhalters (15, 16) entlang laufende Verzahnung (39) eingreift.

4. Abisolierzange nach einem der Ansprüche 1-3, **dadurch gekennzeichnet, dass** auf der Gehäuseschale (4) im Verschiebebereich des Leiteranschlags (14) parallel zu diesem eine Skala aufgetragen.

5. Abisolierzange nach Anspruch 4, **dadurch gekennzeichnet, dass** die Skala aus Millimeterstrichen besteht.

6. Abisolierzange nach einem der Ansprüche 1-5, **dadurch gekennzeichnet, dass** der Leiteranschlag (14) auf dem Messerhalter (15) gehaltert ist, der in dem vorderen Teil der Gehäuseschale (4) untergebracht ist.

7. Abisolierzange nach einem der Ansprüche 1-6, **dadurch gekennzeichnet, dass** die Zugstange (29) parallel zur Zangenlängsachse verschiebbar ist.

8. Abisolierzange nach einem der Ansprüche 1-7, **dadurch gekennzeichnet, dass** die Messerhalter (15, 16) parallel zur Zangenlängsachse verschiebbar ist.

9. Abisolierzange nach einem der Ansprüche 1-8, **dadurch gekennzeichnet, dass** ein Handhebel (2) schwenkbar an der Gehäuseschale (4) gelagert ist.

10. Abisolierzange nach einem der Ansprüche 1-9, **dadurch gekennzeichnet, dass** am vorderen Ende der Klemmbacke (4) und an der Spitze des Gehäuseschalenteils (4) je ein Klemmbackeneinsatz (9, 10) befestigt ist.

11. Abisolierzange nach einem der Ansprüche 1-10, **dadurch gekennzeichnet, dass** die Abisoliermesser (12, 13) als massive Klinge ausgebildet sind.

12. Abisolierzange nach einem der Ansprüche 1-11, **dadurch gekennzeichnet, dass** die Abisoliermesser (12, 13) als Lamellensatz (56) ausgebildet sind.

## Claims

1. Stripping pliers, comprising two hand levers (2, 3), a housing shell (4) and a clamping jaw (8) which is pivotable relative thereto and which forms a pliers mouth (55) with the front part of the housing shell (4), in which two knife holders (15, 16), which are relatively movable to each other, are mounted with a stripping knife (12, 13) each, and the knife holders are secured in the pliers mouth (55) by a pull rod (29), wherein a conductor catch (14) is displaceably mounted on one of the knife holders (15, 16) along said knife holder (15, 16), **characterized in that** the conductor catch (14) is formed in at least two parts, wherein the conductor catch (14) is composed of a limit stop (31) and a limit stop locking element (33), and wherein the limit stop locking element (33) is guided in the limit stop (31) via obliquely extending slots (34), into which a respective protrusion (35) engages which is formed on the inner longitudinal sides of the limit stop (31).

2. Stripping pliers according to claim 1, **characterized in that** the conductor catch (14) is composed of a limit stop (31), a limit stop locking element (33) and a pressure spring (32).

3. Stripping pliers according to one of the claims 1 to 2, **characterized in that** a toothing (36) attached to the limit stop (31) engages in a toothing (39) extending along the longitudinal sides of the knife holder (15, 16).

4. Stripping pliers according to one of the claims 1 to 3, **characterized in that** a scale is applied to the housing shell (4) in the displacement region of the conductor catch (14) parallel thereto.

5. Stripping pliers according to claim 4, **characterized in that** the scale consists of millimetre lines.

6. Stripping pliers according to one of the claims 1 to 5, **characterized in that** the conductor catch (14) is secured on the knife holder (15), which is housed in the front part of the housing shell (4).

7. Stripping pliers according to one of the claims 1 to 6, **characterized in that** the pull rod (29) is displaceable parallel to the longitudinal axis of the pliers.

8. Stripping pliers according to one of the claims 1 to 7, **characterized in that** the knife holders (15, 16) are displaceable parallel to the longitudinal axis of the pliers.

9. Stripping pliers according to one of the claims 1 to 8, **characterized in that** a hand lever (2) is pivotably mounted on the housing shell (4).

10. Stripping pliers according to one of the claims 1 to 9, **characterized in that** one clamping jaw insert (9, 10) each is fastened to the front end of the clamping jaw (4) and to the tip of the housing shell part (4).

11. Stripping pliers according to one of the claims 1 to 10, **characterized in that** the stripping knives (12, 13) are formed as a massive blade.

12. Stripping pliers according to one of the claims 1 to 11, **characterized in that** the stripping knives (12, 13) are formed as a set of blades (56).

## Revendications

1. Pince à dénuder avec deux leviers à main (2, 3), une coque de logement (4) et un mors de serrage (8) pouvant pivoter par rapport à celle-ci, qui forme avec la partie antérieure de la coque de logement (4) un bec de pince (55) dans lequel sont supportés deux porte-lames (15, 16) mobiles l'un par rapport à l'autre et comportant chacun une lame à dénuder (12, 13) et qui sont retenus dans le bec de pince (55) par une tige de traction (29), une butée pour les conducteurs (14) étant montée sur un des porte-lames (15, 16) avec possibilité de translation le long du porte-lames (15, 16), **caractérisée en ce que** la butée pour les conducteurs (14) est construite en au moins deux parties, la butée pour les conducteurs (14) se composant d'une butée (31) et d'un élément d'enclenchement de butée (33) et l'élément d'enclenchement de butée (33) étant guidé dans la butée (31) par des trous oblongs obliques (34) dans chacun desquels un évasement (35) formé sur l'intérieur de la face longitudinale de la butée (31) se met en prise.

2. Pince à dénuder selon la revendication 1, **caractérisée en ce que** la butée pour les conducteurs (14) se compose d'une butée (31), d'un élément d'enclenchement de butée (33) et d'un ressort de compression (32).

3. Pince à dénuder selon l'une des revendications 1 à 2, **caractérisée en ce qu'**une denture (36) formée sur la butée (31) se met en prise dans une denture (39) courant le long des côtés longitudinaux du porte-lames (15, 16).

4. Pince à dénuder selon l'une des revendications 1 à 3, **caractérisée en ce qu'**une échelle graduée est marquée sur la coque de logement (4) dans la zone de translation de la butée pour les conducteurs (14), parallèlement à celle-ci.

5. Pince à dénuder selon la revendication 4, **caractérisée en ce que** l'échelle est formée de graduations en millimètres.

6. Pince à dénuder selon l'une des revendications 1 à 5, **caractérisée en ce que** la butée pour les conducteurs (14) est retenue sur le porte-lames (15) qui est logé dans la partie antérieure de la coque de logement (4).

7. Pince à dénuder selon l'une des revendications 1 à 6, **caractérisée en ce que** la tige de traction (29) est capable de translation parallèlement à l'axe longitudinal de la pince.

8. Pince à dénuder selon l'une des revendications 1 à 7, **caractérisée en ce que** le porte-lames (15, 16) est capable de translation parallèlement à l'axe longitudinal de la pince.

9. Pince à dénuder selon l'une des revendications 1 à 8, **caractérisée en ce qu'**un levier à main (2) est supporté de façon pivotante sur la coque de logement (4).

10. Pince à dénuder selon l'une des revendications 1 à 9, **caractérisée en ce qu'**un insert de mors de serrage (9, 10) est fixé à l'extrémité du mors de serrage (4) et un autre à la pointe de la partie de coque de logement (4).

11. Pince à dénuder selon l'une des revendications 1 à 10, **caractérisée en ce que** la lame à dénuder (12, 13) est conformée comme une lame pleine.

12. Pince à dénuder selon l'une des revendications 1 à 11, **caractérisée en ce que** la lame à dénuder (12, 13) est conformée comme un jeu de lamelles (56).
